(19) Europäisches Patentamt
European Patent Office
Office européen des brevets

(11) **EP 3 013 477 B1**

(12) **FASCICULE DE BREVET EUROPEEN**

(45) Date de publication et mention de la délivrance du brevet:
**19.06.2019 Bulletin 2019/25**

(21) Numéro de dépôt: **14735527.5**

(22) Date de dépôt: **27.06.2014**

(51) Int Cl.:
*B01L 3/00* *(2006.01)*     *B01D 21/00* *(2006.01)*
*B01D 21/26* *(2006.01)*     *B01L 3/02* *(2006.01)*

(86) Numéro de dépôt international:
**PCT/EP2014/063664**

(87) Numéro de publication internationale:
**WO 2014/207183 (31.12.2014 Gazette 2014/53)**

(54) **DISPOSITIF DE SÉPARATION D'UNE SUSPENSION**

VORRICHTUNG ZUR TRENNUNG EINER SUSPENSION

DEVICE FOR SEPARATING A SUSPENSION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.06.2013 FR 1356320**

(43) Date de publication de la demande:
**04.05.2016 Bulletin 2016/18**

(73) Titulaire: **Commissariat à l'Énergie Atomique et aux Énergies Alternatives
75015 Paris (FR)**

(72) Inventeurs:
- **FOUILLET, Yves**
  **F-38340 Voreppe (FR)**
- **DELAPIERRE, Guillaume**
  **F-38450 Vif (FR)**

(74) Mandataire: **Brevalex
95, rue d'Amsterdam
75378 Paris Cedex 8 (FR)**

(56) Documents cités:
EP-A1- 2 119 488     EP-A1- 2 119 504
FR-A1- 2 918 900     US-A- 4 623 470

**Description**

**DOMAINE TECHNIQUE**

L'invention se rapporte au domaine de la micro-fluidique et concerne un dispositif et une pipette d'extraction d'une phase liquide appauvrie en particules d'une suspension. L'invention s'applique en particulier à l'extraction du plasma sanguin.

**ÉTAT DE LA TECHNIQUE ANTÉRIEURE**

De façon générale, lorsque l'on souhaite analyser un échantillon d'un liquide contenant des particules, il est nécessaire de fractionner préalablement ce liquide pour séparer une phase liquide appauvrie en particules d'une phase enrichie en particules afin de ne prendre en compte que la phase liquide d'intérêt. Par phase liquide appauvrie en particules, on entend un milieu liquide dont la concentration en particules est inférieure à celle de la suspension et par phase enrichie en particules, on entend la partie restante de la suspension ayant par conséquent, une concentration en particules supérieure à celle de la suspension.

Dans le cas d'une analyse sanguine, il est nécessaire de séparer les cellules sanguines (particules) du plasma (ou sérum) afin d'effectuer des analyses sur ce dernier, par exemple : des tests de coagulations, dépistages, analyse de composition sanguine.

L'étape de séparation ou de fractionnement est généralement effectuée par des techniques de centrifugation ou de filtration, dans des systèmes de dimensions macroscopiques. Par exemple, pour effectuer une analyse sanguine, il est nécessaire de centrifuger les échantillons de sang dans un laboratoire spécialisé nécessitant un personnel qualifié et des systèmes adaptés pour séparer les cellules sanguines du plasma.

Le fait que ces étapes soient effectuées dans un laboratoire présente plusieurs contraintes : un temps d'attente entre les deux étapes pendant lequel un échantillon sensible peut se dégrader, la disponibilité des équipements et du personnel du laboratoire, le coût, la difficile reproductibilité et homogénéité du processus global de fractionnement et d'analyse de l'échantillon.

Une avancée a été trouvée grâce à la miniaturisation des microsystèmes d'analyse (aussi appelés laboratoires sur puce (« Lab on chip ») qui permettent de disposer aisément et rapidement d'un système d'analyse et donc de relâcher en partie les contraintes exposées ci-dessus.

Dans le domaine des microsystèmes, il existe une technique décrite dans l'article de M. Favre et al., « Geometrical focusing of cells in a microfluidic device : an approach to separate blood plasma », Biotheology (2006) 43 : 147-159. Cette technique se fonde sur le fait que des particules en suspension injectées dans un canal subissent une migration latérale hétérogène due aux forces de cisaillement. L'application de cette technique à l'extraction du plasma sanguin fait apparaitre le plasma au bord du canal entourant un anneau enrichie en particules et une zone centrale de concentration homogène.

L'inconvénient de cette technique est que la moindre action (par exemple, l'extraction du plasma) perturbe la configuration de l'écoulement. De plus, la zone appauvrie en particules dépend des conditions de l'écoulement (viscosité du liquide, caractéristiques rhéologiques des particules), conditions très variables selon les patients et les pathologies du sang.

Ce problème est résolu par la demande de brevet de la demanderesse FR2931079 qui exploite le pouvoir de séparation des vortex de recirculation qui apparaissent lorsque l'écoulement d'un fluide dans une conduite est perturbé par une singularité géométrique. Cette technique est particulièrement avantageuse car l'effet de séparation se produit quelle que soit la particule contenue dans la suspension (rigide ou déformable, sphérique ou ellipsoïdale, etc.). De plus, ce phénomène est robuste par rapport à une éventuelle perturbation de l'écoulement et permet d'obtenir des zones appauvries en particules aux dimensions importantes, ce qui permet un rendement d'extraction important.

Un but de la présente invention est d'améliorer encore davantage le rendement d'extraction d'une phase liquide appauvrie en particules d'une suspension.

Un autre but est de simplifier la manipulation de la séparation et de l'extraction tout en s'affranchissant d'une dépendance aux choix des connectiques avec des actionneurs de types pompes ou pousse-seringues.

**EXPOSÉ DE L'INVENTION**

La présente invention est définie par un dispositif d'extraction d'une phase liquide appauvrie en particules d'une suspension, comportant :

- une conduite principale d'écoulement de ladite suspension, la conduite principale comportant une cellule de fractionnement comprenant au moins un lieu de singularité adapté pour provoquer la formation d'au moins un vortex de recirculation et un canal de pré-configuration de couche claire disposé en amont de la cellule de fractionnement, ladite cellule de fractionnement et ledit canal de pré-configuration sont formés sur un même substrat, et

- au moins un moyen de prélèvement de liquide, disposé au niveau d'une région de la cellule de fractionnement où ladite suspension se trouve appauvri en particules du fait dudit vortex de recirculation.

Le fait que la conduite principale qui comprend la cellule de fractionnement et le canal de pré-configuration, est formée d'un seul tenant sur un même substrat permet de s'affranchir d'une connectique amont évitant ainsi les contraintes technologiques liées à des problèmes de connexion tout en optimisant la qualité de fractionnement. L'orifice d'entrée du canal de pré-configuration peut donc être directement plongé dans un récipient contenant un échantillon de la suspension pour aspirer cette dernière sans perturber l'établissement de la couche claire.

Le canal de pré-configuration présente une longueur supérieure à une longueur limite de stabilité de la couche claire. Le canal de pré-configuration permet ainsi de développer une couche claire stable. Par stable, on entend que la couche claire ne s'élargit plus, ou sensiblement plus, au-delà de cette longueur.

Au moins un premier réservoir est prévu pour récupérer ladite phase liquide appauvrie en particules, au moins un deuxième réservoir est prévu pour récupérer la phase restante enrichie en particules de ladite suspension, et un moyen de commande est prévu pour aspirer la suspension lors d'un premier actionnement afin de l'amener dans la cellule de fractionnement où elle se fractionne en une première fraction liquide appauvrie en particules et une seconde fraction enrichie en particules et pour guider ladite première fraction, appauvrie, vers ledit au moins premier réservoir et ladite seconde fraction, enrichie, vers ledit au moins un deuxième réservoir.

Ainsi, un simple actionnement du moyen de commande permet à la fois de séparer la suspension en une phase liquide appauvrie en particules et une phase concentrée en particules et de stocker chacune des phases dans des réservoirs respectifs.

Avantageusement, ledit moyen de commande est configuré lors d'un deuxième actionnement à éjecter ladite phase liquide appauvrie en particules ou ladite phase liquide enrichie en particules.

Ainsi, le même moyen de commande peut être utilisé pour en plus récupérer la phase liquide appauvrie en particules ou la phase liquide enrichie en particules.

Avantageusement, le dispositif comporte un moyen d'anti-retour disposé en amont du deuxième réservoir, configuré pour retenir la phase restante, par exemple, la phase liquide enrichie en particules, dans ledit deuxième réservoir lors de l'éjection de ladite phase liquide appauvrie en particules.

Ainsi, la phase concentrée en particules reste stockée dans son réservoir limitant les risques de contamination ou de pollution.

Ledit au moins un premier réservoir et ledit au moins un deuxième réservoir sont/est intégré(s) dans ledit dispositif.

Ainsi, il n'est pas nécessaire de prévoir des connexions avec un réservoir et/ou des réservoirs en dehors du dispositif. De plus, dans le cas d'une suspension biologique de type sang, après récupération du plasma, le sang concentré reste stocké dans le dispositif évitant toute contamination.

Avantageusement, le ratio entre le volume total dudit au moins un premier réservoir, destiné à recevoir la phase appauvrie, et le volume dudit au moins un deuxième réservoir, destiné à recevoir la phase enrichie, est dépendent d'un rendement d'extraction préalablement déterminé. Par exemple, le ratio entre le volume total dudit au moins un premier réservoir et le volume dudit au moins un deuxième réservoir est inférieur ou égal au ratio du rendement d'extraction de la phase appauvrie sur le rendement d'extraction de la phase enrichie.

Le fait que le volume du premier réservoir, destiné à contenir la phase appauvrie soit inférieur au volume du deuxième réservoir multiplié par le rendement d'extraction de la phase enrichie, permet de remplir totalement le premier réservoir avant le deuxième réservoir permettant de se préserver d'éventuelles pollutions de la phase appauvrie par une partie de la phase enrichie.

Par rendement d'extraction de la phase appauvrie (respectivement enrichie), on entend le volume de la phase appauvrie (respectivement enrichie) sur le volume prélevé.

Selon un mode de réalisation, le dispositif comporte un réservoir tampon, apte à collecter la suspension, notamment lors d'un premier actionnement d'un moyen de commande, ledit réservoir tampon étant disposé en amont de la cellule de fractionnement, de telle sorte que lors d'un deuxième actionnement d'un moyen de commande, la suspension est dirigée du réservoir tampon vers la cellule de fractionnement.

Selon ce mode de réalisation, on prélève le liquide dont on souhaite séparer une phase appauvrie d'une phase enrichie. Ce liquide est préalablement stocké dans le réservoir tampon. Un actionnement de ce moyen de commande permet de diriger ledit liquide vers la conduite principale, de telle sorte que le liquide pénètre dans la cellule de fractionnement.

Ce mode de réalisation, comporte plusieurs variantes, selon lesquelles :

- Le dispositif comporte, en aval de la cellule de fractionnement, un premier orifice d'éjection, pour éjecter une phase liquide appauvrie en particules, et/ou un deuxième orifice d'éjection, pour éjecter une phase liquide enrichie en particules.
- Le dispositif comporte, en aval de la cellule de fractionnement, un deuxième réservoir pour collecter la phase liquide enrichie, et un premier orifice, pour éjecter la phase liquide appauvrie du dispositif.
- Le dispositif comporte, en aval de la cellule de fractionnement, un premier réservoir, pour collecter la phase liquide appauvrie, et un deuxième orifice pour éjecter la phase liquide enrichie du dispositif.

Les caractéristiques de ces différentes variantes peuvent être combinées, selon les combinaisons techniquement réalisables.

Avantageusement, ledit moyen de commande est intégré dans ledit dispositif et est configuré pour contrôler la pression dans la conduite principale et ledit au moins un moyen de prélèvement.

Ainsi, le dispositif peut être utilisé de manière indépendante de tout autre équipement.

Avantageusement, la longueur limite de stabilité de la couche claire est déterminée, de préférence expérimentalement, en fonction des propriétés de la suspension et de l'écoulement ainsi que de la section du canal de pré-configuration.

Avantageusement, la suspension est une suspension biologique et le canal de pré-configuration présente une longueur supérieure à 1cm voire 5cm, une profondeur comprise entre environ $50\mu m$ et $200\mu m$, et une largeur comprise entre environ $50\mu m$ et $200\mu m$.

Avantageusement, le canal de pré-configuration est en forme de serpentin. Ceci permet d'avoir un dispositif compact.

Avantageusement, la conduite principale présente un rétrécissement en amont de la cellule de fractionnement.

Ceci permet d'augmenter l'épaisseur de la couche claire à l'entrée de la cellule de fractionnement.

Selon un mode de réalisation, le dispositif comporte un moyen d'injection d'un tampon de dilution débouchant dans la conduite principale en amont du canal de pré-configuration.

Selon un autre mode de réalisation, le dispositif est constitué par au moins deux dispositifs élémentaires couplés entre eux, de telle manière que les conduites principales sont reliées en série et les moyens de prélèvements correspondants sont reliés en dérivation.

Selon encore un autre mode de réalisation, le dispositif est constitué par une pluralité de dispositifs élémentaires, de telle manière que le moyen de prélèvement d'un dispositif courant est relié en série avec la conduite principale d'un dispositif suivant de sorte que la phase liquide appauvrie en particules extraite par le dispositif courant soit injectée en entrée du dispositif suivant.

L'invention vise également un robot d'analyse comportant le dispositif selon l'une quelconque des caractéristiques précédentes.

L'invention vise aussi un système d'extraction autonome comportant le dispositif selon l'une quelconque des caractéristiques précédentes.

L'invention vise également une pipette d'extraction d'une phase liquide appauvrie en particules d'une suspension, comportant :

- une conduite principale d'écoulement de ladite suspension, la conduite principale comportant un canal de pré-configuration d'une couche claire muni d'un orifice d'admission ayant une entrée principale, une cellule de fractionnement disposée en aval dudit canal de pré-configuration et comprenant au moins un lieu de singularité adapté pour provoquer la formation d'au moins un vortex de recirculation, et un orifice principal d'aspiration disposé en aval de ladite cellule de fractionnement,
- au moins un moyen de prélèvement de liquide comprenant au moins une entrée de prélèvement disposée au niveau d'une région de la cellule de fractionnement où ladite suspension se trouve appauvri en particules et un orifice secondaire d'aspiration,
- au moins un premier réservoir intégré à la pipette pour récupérer ladite phase liquide appauvrie en particules, ledit au moins un premier réservoir étant aménagé dans ledit au moins un moyen de prélèvement de liquide et étant disposé entre ledit au moins une entrée de prélèvement et ledit orifice secondaire d'aspiration,
- et au moins un deuxième réservoir intégré à la pipette pour récupérer la phase restante enrichie en particules de ladite suspension, ledit au moins un deuxième réservoir étant aménagé dans ladite conduite principale et étant disposé entre ladite cellule de fractionnement et ledit orifice principal d'aspiration.

La pipette comporte un moyen de commande couplé aux orifices principal et secondaire d'aspiration, ledit moyen de commande étant configuré lors d'un premier actionnement à aspirer la suspension pour l'amener dans la cellule de fractionnement où ladite suspension se fractionne en une première fraction liquide appauvrie en particules et une seconde fraction enrichie en particules, ledit moyen de commande guidant ladite première fraction vers ledit au moins un premier réservoir et ladite seconde fraction vers ledit au moins un deuxième réservoir.

Avantageusement, le canal de pré-configuration est en forme de serpentin.

Avantageusement, la pipette comporte deux premiers réservoirs latéraux pour récupérer la phase liquide appauvrie en particules et un deuxième réservoir central pour récupérer la phase enrichie en particules, le ratio en volume des réservoirs latéraux par rapport au réservoir central étant inférieur à 0,15.

Avantageusement, le moyen de commande comporte un tube terminé par une ouverture reliée d'une part à l'orifice principal et d'autre part à l'orifice secondaire, ledit tube étant muni d'un piston couplé à un ressort de sorte que l'action du ressort sur le piston crée une dépression adaptée pour aspirer la suspension.

Avantageusement, la pipette comporte un premier filtre disposé au niveau de l'orifice secondaire, et un deuxième filtre disposé au niveau de l'orifice principal, lesdits premier et deuxième filtres étant configurés pour laisser passer l'air et bloquer tout écoulement de liquide.

Avantageusement, le premier filtre est en matériau hydrophobe et le deuxième filtre est en matériau hydrophile de sorte qu'une différence de mouillabilité est créée entre les premier et deuxième filtres qui fait que lors d'une mise en surpression des réservoirs, ledit au moins un premier réservoir se vide alors que le deuxième réservoir reste plein.

En variante, la pipette comporte une valve disposée au niveau de l'orifice principal de sorte que lors d'une mise en surpression des réservoirs, ledit au moins un premier réservoir se vide alors que le deuxième réservoir reste plein.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

Les Figs. 1A et 1B illustrent de manière schématique des dispositifs d'extraction d'une phase liquide appauvrie en particules d'une suspension, selon différents modes de réalisation de l'invention ;
La Fig. 2A, illustre de manière schématique le profil transversal de distribution des particules dans un canal ;
La Fig. 2B, illustre de manière schématique une mutualisation de l'effet de couche claire avec l'effet de recirculation ;
La Fig. 3 est un modèle rhéologique illustrant un schéma fluidique équivalent du circuit d'extraction de la Fig. 1A ou 1B ;
Les Figs. 4A-4C illustrent de manière schématique les étapes d'extraction d'une phase liquide appauvrie en particules d'une suspension, selon un mode de réalisation de l'invention ;
La Fig. 5 illustre de manière schématique une vue partielle d'un dispositif d'extraction monté dans un robot d'analyse, selon un mode de réalisation de l'invention ;
La Fig. 6 illustre de manière schématique un dispositif d'extraction, selon un autre mode de réalisation de l'invention ;
La Fig. 7 illustre de manière schématique une pipette d'extraction d'une phase liquide appauvrie en particules d'une suspension, selon un mode préféré de réalisation de l'invention ;
La Fig. 8 illustre de manière schématique un système d'extraction comportant un support de pipette et une pipette d'extraction, selon un autre mode préféré de réalisation de l'invention ;
Les Figs. 9A-9C illustrent de manière schématique un dispositif d'extraction, selon d'autres modes de réalisation de l'invention ; et
Les Fig. 10-12 illustrent des dispositifs d'extraction selon encore d'autres modes de réalisation de l'invention.

## EXPOSÉ DÉTAILLÉ DE MODES DE RÉALISATION PARTICULIERS

Le principe de l'invention est de proposer un dispositif d'extraction compact et dont le rendement est indépendant du choix de la connectique à des actionneurs ou outils extérieurs.

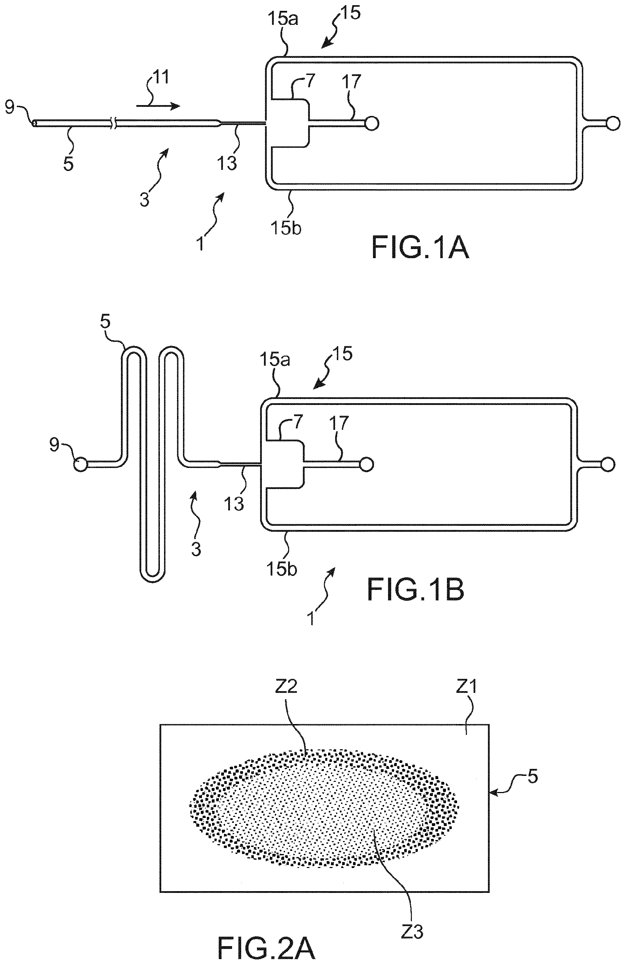

Les Figs. 1A et 1B illustrent de manière schématique des modes de réalisation selon l'invention, d'un dispositif d'extraction d'une phase liquide appauvrie en particules d'une suspension.

Le dispositif d'extraction 1 comporte une conduite principale 3 destinée à l'écoulement d'une suspension de particules. La conduite principale 3 comporte un canal de pré-configuration 5 et une cellule de fractionnement 7 formés d'un seul tenant sur un même substrat ou sur un substrat connexe. Selon un mode de réalisation de l'invention, le dispositif 1 est réalisé en technologie planaire, par gravure de la conduite principale 3 sur un substrat de base scellé ensuite par un capot. Le dispositif 1 peut aussi être réalisé par moulage.

Le matériau du substrat peut être choisi parmi les matériaux suivants : le verre, pyrex ou un matériau organique tel que le polycarbonate ou le PEEK, le silicium monocristallin, le silicium polycristallin, le nitrure de silicium, l'oxyde de silicium. Le substrat est avantageusement réalisé en un matériau transparent. L'épaisseur du substrat peut être comprise entre quelques dizaines de microns et quelques dizaines de millimètres.

Le canal de pré-configuration 5 est muni d'un orifice d'admission 9 et est disposé en amont de la cellule de fractionnement 7 par rapport à l'écoulement de la suspension dans un sens d'aspiration (flèche 11). Par convention, dans la suite de la description on appellera sens d'aspiration 11 le sens allant de l'orifice d'admission 9 du canal de pré-configuration 5 vers la cellule de fractionnement 7, et sens d'éjection le sens contraire du sens d'aspiration.

Par ailleurs, les termes amont et aval sont à interpréter par rapport au sens d'écoulement du liquide dans le dispositif. Un premier élément est disposé en amont d'un deuxième élément lorsque le fluide atteint le premier élément avant d'atteindre le deuxième élément dans le sens d'écoulement.

La forme de la section transversale de la conduite principale 3 est quelconque et peut être carrée, rectangulaire ou même circulaire. Par exemple, les dimensions transversales d'une conduite principale 3 de forme sensiblement parallélépipédique sont comprises entre environ 10 μm et 10 mm selon la portion de la conduite.

Lors de l'écoulement de la suspension dans le canal de pré-configuration 5, les particules présentes dans la suspension subissent une force de portance qui tend à les éloigner des parois. En effet, la Fig. 2A, tirée de la demande de brevet FR2931079 montre qu'au bout d'une certaine longueur d'écoulement, le profil transversal de distribution des particules comporte :

- une première zone Z1 près des parois où la concentration en particules est très faible, notamment au contact des parois,
- une deuxième zone Z2 en forme d'anneau centré sur l'axe longitudinal du canal où la concentration en particules est plus élevée,
- une troisième zone centrale Z3 où la concentration en particules est intermédiaire par rapport aux deux autres zones.

Ainsi, le canal de pré-configuration 5 réalise une première séparation en établissant une phase liquide appauvrie en particules, appelée couche claire, au voisinage de ses parois.

Avantageusement, le canal de pré-configuration 5 présente une longueur supérieure à une longueur limite de stabilité de la couche claire. En effet, la couche claire s'élargit avec la longueur d'écoulement, jusqu'à se stabiliser à partir de la longueur limite. Par stable, on entend que la couche claire ne s'élargit plus, ou sensiblement plus, au-delà de cette longueur de stabilité et devient alors plus robuste par rapport à une éventuelle perturbation de l'écoulement. La longueur limite de stabilité de la couche claire est déterminée en fonction des propriétés de la suspension (notamment de sa concentration en particules et de la déformabilité de ces dernières) et de l'écoulement ainsi que de la section du canal de pré-configuration 5. Par exemple pour une suspension biologique (telle que le sang), la longueur limite de stabilité est de l'ordre de 1 cm. A titre d'exemple, pour une suspension biologique, le canal de pré-configuration 5 présente une longueur comprise entre environ 1cm et 10cm et de préférence supérieure à 1cm voire 5cm, une profondeur comprise entre environ 50μm et 100μm, et une largeur comprise entre environ 50μm et 200μm.

Avantageusement, le canal de pré-configuration 5 est en forme de serpentin comme illustré sur la Fig. 1B. Ceci permet de réduire l'encombrement d'un canal droit sans affecter la performance du dispositif.

La cellule de fractionnement 7 disposé en aval du canal de pré-configuration 5, lorsque le fluide pénètre dans le dispositif, comprend au moins un lieu de singularité géométrique adapté pour provoquer la formation d'au moins un vortex de recirculation. La singularité est réalisée par un changement brusque de la section de la conduite. Elle peut être un élargissement brusque, une contraction brusque, une cavité ouverte sur la conduite, ou un obstacle placé dans la conduite. Dans les exemples des Figs. 1A et 1B, la singularité est formée par un élargissement brusque, de préférence d'un facteur 2 à 8 en largeur.

Plus précisément, en aval de la singularité, l'écoulement se divise en une partie centrale, dans laquelle les particules s'écoulent selon l'axe de la conduite. En périphérie de cet écoulement central se forme une zone de recirculation, alimentée par la couche claire, qui tend à ramener les particules vers l'écoulement central. Cette zone de recirculation, ou tourbillon, permet un appauvrissement supplémentaire de la couche claire.

Dans le cas du sang, le plasma (phase liquide appauvrie en particules) se trouve au niveau du vortex, et plus particulièrement au centre et à la périphérie de ce dernier.

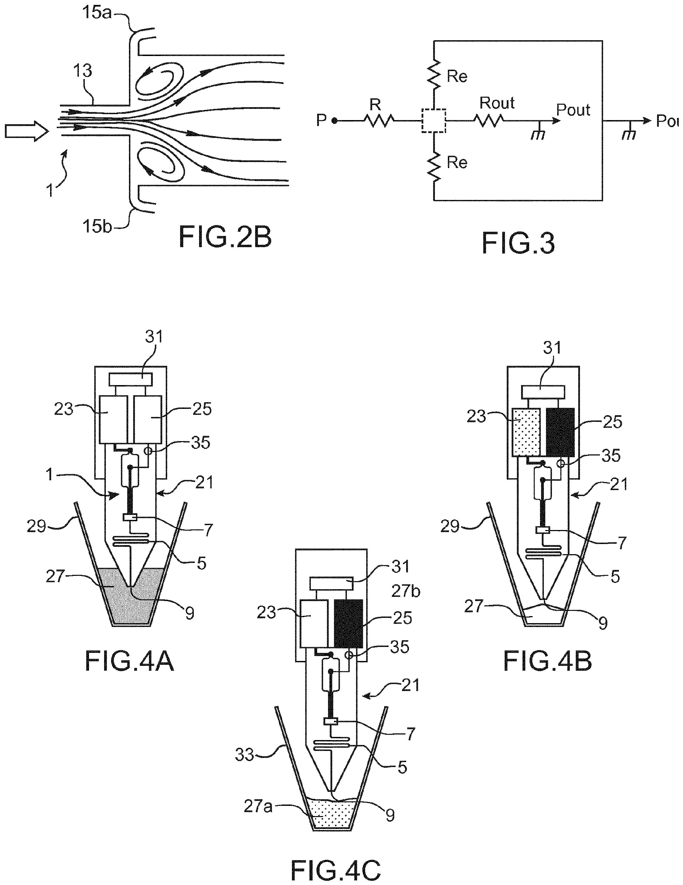

Afin de mutualiser l'effet de couche claire avec l'effet de recirculation, la singularité est apte à produire un vortex alimenté par la couche claire formée en amont de cette dernière, comme illustré sur la Fig. 2B.

En outre, pour amplifier encore davantage la couche claire, la conduite principale 3 présente un rétrécissement 13 en amont de la cellule de fractionnement 7 et plus précisément entre cette dernière et le canal de pré-configuration 5.

Afin d'extraire une fraction de la suspension appauvrie en particules, le dispositif d'extraction 1 comporte au moins un moyen de prélèvement 15 de liquide disposé au niveau du vortex de la cellule de fractionnement 7 où la suspension se trouve appauvrie en particules du fait du pouvoir séparateur du vortex de recirculation. Le moyen de prélèvement 15 est par exemple un canal de sortie secondaire (ou canal d'extraction secondaire) débouchant d'une de ces régions appauvries en particules, de préférence à la périphérie du vortex, ce qui est plus simple à réaliser.

Dans l'exemple des Figs. 1A et 1B, le dispositif d'extraction 1 comporte deux canaux de sortie secondaires 15a, 15b de part et d'autre de la conduite principale 3. En outre, en aval de la cellule de fractionnement 7, la conduite principale 3 se prolonge par un canal de sortie principal (ou canal d'extraction principal) 17 pour l'extraction de la phase enrichie en particules.

Ainsi, la fonction de la cellule de fractionnement 7 est de provoquer une zone de recirculation, ou vortex, alimentée par la couche claire formée en amont de la zone de recirculation, de laquelle on peut prélever une fraction du fluide appauvrie en particules. Autrement dit, la zone de fractionnement 7 permet une séparation marquée du fluide entre une fraction enrichie et une fraction appauvrie.

La Fig. 3 est un modèle rhéologique illustrant un schéma fluidique équivalent du circuit d'extraction de la Fig. 1A ou 1B.

Les différents canaux du dispositif d'extraction 1 sont représentés par des branches définies par des résistances fluidiques $R$, $R_e$, et $R_{out}$. Plus précisément, ces résistances $R$, $R_e$, et $R_{out}$ symbolisent les pertes de charge sur le canal de pré-configuration 5, les canaux de sortie secondaires 15a, 15b, et le canal de sortie principal 17, respectivement. Les canaux de sortie principal et secondaires sont avantageusement reliés à une même pression de sortie $P_{out}$ et l'entrée du dispositif 1 est relié à une pression d'entrée P. A titre d'exemple, la pression d'entrée P est égale à la pression ambiante et la pression de sortie $P_{out}$ est négative pour un fonctionnement du dispositif d'extraction 1 en mode aspiration.

On rappelle que la perte de charge $\Delta P$ dans un canal est proportionnelle au débit Q selon l'expression suivante :

$$\Delta P = KQ$$

En outre, pour un fluide (suspension) de viscosité $\mu$ s'écoulant dans un canal à section rectangulaire de longueur $L$, de largeur $w$ et de profondeur $h$, le coefficient de perte de charge $K$ est donné par l'expression suivante :

$$K = \frac{8\mu(W + h)^2}{h^3 W^3} L$$

Par ailleurs, les flux dans les canaux sont gérés par des relations linéaires entre les pressions et les débits.

Plus particulièrement, le débit d'extraction $Q_e$ de la phase liquide appauvrie en particules est proportionnel au débit d'entrée Q de la suspension :

$$Q_e = \frac{1}{2}\eta Q$$

où $\eta$ est la performance du dispositif d'extraction 1 représentant le ratio d'extraction maximum avant que l'extraction soit polluée. La performance $\eta$ est déterminée expérimentalement.

Si le ratio d'extraction est plus grand que $\eta$, la pureté de la phase liquide extraite n'est plus garantie. En effet, plus on extrait une phase liquide appauvrie en particules plus de particules sont attirées vers les parois, jusqu'à envahir et polluer les canaux de sortie secondaires 15a, 15b (canaux d'extraction secondaires).

La conservation des débits entre le débit d'entrée Q, chaque débit d'extraction $Q_e$, et le débit de sortie $Q_{out}$ est donnée par l'expression suivante :

$$Q = Q_{out} + 2Q_e$$

En outre, en appliquant la loi des mailles, on obtient :

$$R_{out}Q_{out} = R_e Q_e$$

Finalement, à partir des trois équations précédentes, on peut déterminer le dimensionnement de la résistance fluidique d'extraction $R_e$ en fonction de la résistance fluidique de sortie $R_{out}$ et de la performance $\eta$ :

$$R_e = 2\frac{1 - \eta}{\eta}R_{out}$$

Par exemple pour un ratio d'extraction de 15% (*i.e.*, une performance $\eta$ = 0,15), la résistance fluidique d'extraction $R_e$ doit être d'environ onze fois la résistance fluidique de sortie $R_{out}$ (*i.e.*, $R_e \approx 11R_{out}$). La résistance hydraulique étant proportionnelle à la longueur du canal, il suffit par exemple que la longueur d'un canal de sortie secondaire 15a, 15b soit onze fois plus grande que la longueur du canal de sortie principale 17 avec les mêmes largeurs et hauteurs des canaux.

Ainsi, en respectant les dimensionnements des résistances fluidiques d'extraction $R_e$ et de sortie $R_{out}$, le ratio d'extraction peut être fixé par exemple à 15% et ceci indépendamment de la pression et de la viscosité de la suspension. Ceci permet de relâcher les contraintes technologiques liées au système d'actionnement du dispositif d'extraction 1. Par ailleurs, le dimensionnement des différents éléments peut aussi être estimé par simulation pour permettre un rendement d'extraction maximal.

A titre indicatif, un exemple de dimensions des différents canaux de la Fig. 1A ou 1B est donné dans le tableau suivant :

| Référence | Longueur mm | Largeur $\mu$m | Hauteur $\mu$m | Résistance |
|---|---|---|---|---|
| 5 | 50 | 100 | 100 | R |
| 13 | 0,5 | 50 | 100 | |
| 7 | 2 | 600 | 100 | $R_{out}$ |
| 17 | 14 | 100 | 100 | |
| 15 | 5 | 200 | 100 | $R_e$ |

On a constaté qu'un tel dispositif fonctionne correctement sur une grande plage de débit d'injection Q, ce dernier étant notamment supérieur à 1 $\mu$l/mn, et par exemple compris entre 1 $\mu$l/mn et 1 ml/mn. La relation entre le débit et la différence de pression ($P_{out}$ - P) se déduit des expressions précédentes.

Les Figs. 4A-4C illustrent de manière schématique les étapes d'extraction d'une phase liquide appauvrie en particules d'une suspension, selon un mode de réalisation de l'invention.

Plus particulièrement, la Fig. 4A montre que le dispositif d'extraction 1 est en forme de pipette ou intégré dans une pipette 21 et qu'au moins un premier réservoir 23 est prévu pour récupérer la phase liquide appauvrie en particules et qu'au moins un deuxième réservoir 25 est prévu pour récupérer la phase restante enrichie en particules de la suspension. Un seul premier réservoir 23 et un seul deuxième réservoir 25 sont illustrés dans le mode de réalisation des Figs. 4A-4C.

L'étape de la Fig. 4A montre l'orifice d'admission 9 du dispositif d'extraction 1 (*i.e.*, orifice d'entrée de la pipette) plongé dans une suspension 27 contenue dans un récipient 29. Ce dernier est par exemple un tube de prélèvement sanguin contenant du sang dilué à environ 1:10 à 1:20.

En outre, un moyen de commande 31 est prévu pour aspirer la suspension 27 (lors d'un premier actionnement) afin de l'amener dans la cellule de fractionnement 7 où elle se fractionne en une première fraction liquide appauvrie en particules (par exemple, du sérum) et une seconde fraction enrichie en particules (par exemple, des globules rouges ou autres particules sanguines). De plus, l'effet d'aspiration opéré par le moyen de commande 31 guide la première fraction vers le premier réservoir 23 et la seconde fraction vers le deuxième réservoir 25.

L'aspiration peut être réalisée par des moyens de pompages traditionnels, comme des micro-pompes électriques ou par des systèmes de mise en dépression manuels, à un débit contrôlé afin de ne pas perturber les vortex de séparation et en assurant le ratio d'extraction (*i.e.*, performance $\eta$) souhaité.

Avantageusement, avant le début du processus d'aspiration, le dispositif 1 est mis sous vide maintenu grâce par exemple à un opercule qui obture de manière étanche l'orifice d'admission de la pipette. L'intérêt de la mise sous vide est d'éviter des éventuelles bulles d'air qui perturberaient les phénomènes de recirculation et de couche claire. Le pompage est donc enclenché par la rupture de l'opercule.

La Fig. 4B montre que chacune des fractions est stockée dans son réservoir correspondant. La phase liquide appauvrie en particules 27a est stockée dans le premier réservoir 23 et la phase restante 27b (i.e., la phase enrichie) est stockée dans le deuxième réservoir 25.

Lors de la configuration du dispositif d'extraction 1, on choisira bien entendu, les volumes des premier et deuxième réservoirs 23, 25 de sorte que leur rapport soit inférieur au rapport entre le volume estimé de la phase liquide appauvrie 27a dans la suspension 27 et le volume de la phase restante 27b. Ainsi, on déterminera ces volumes en fonction de l'application et de la nature de la suspension. Par exemple, dans le cas où le dispositif 1 ou pipette 21 d'extraction selon l'invention est appliqué au fractionnement et à l'extraction du sang, le volume fluidique appauvri en particules sera le plasma sanguin. On sait que pour un litre de sang, le volume de plasma est de 400 à 500 mL. On choisira alors, en première approximation les volumes dans un rapport inférieur à 4/10.

Pourse préserver d'éventuelles pollutions, les réservoirs 23, 25 sont dimensionnés de sorte que le premier réservoir 23 se remplisse avant ou en même temps que le deuxième réservoir 25. De plus, pour respecter un ratio d'extraction optimal, le ratio entre le volume du premier réservoir 23 et le volume du deuxième réservoir 25 est choisi

inférieur à $\frac{\eta}{1-\eta}$, ce ratio prenant la valeur de 0,17 lorsque $\eta = 0,15$.

Par ailleurs, le même moyen de commande 31 peut être configuré également pour éjecter l'une des deux phases (par exemple, la phase liquide appauvrie en particules 27a) tout en maintenant l'autre phase 27b dans le réservoir 25.

L'exemple de la Fig. 4C montre que lors d'un deuxième actionnement du moyen de commande 31, la phase liquide appauvrie en particules 27a (par exemple, le plasma) est éjecté pour être récupéré dans un autre récipient 33 tandis que la phase concentrée en particules 27b reste stockée dans le deuxième réservoir 25 grâce à un moyen d'anti-retour 35 disposé en amont du deuxième réservoir 25. Ce moyen d'anti-retour 35 peut être réalisé par un mécanisme de bille mobile insérée dans la conduite principale 3 juste en amont du deuxième réservoir 25 pour bloquer l'évacuation de la phase restante 27b lors de l'éjection de la phase liquide appauvrie en particules 27a.

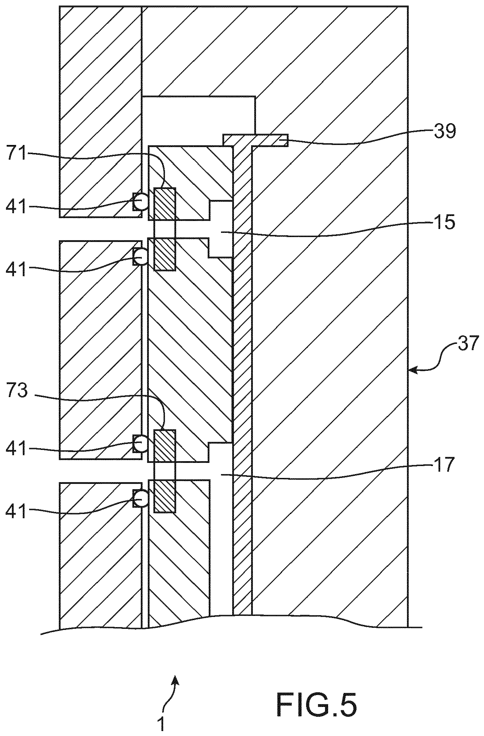

La Fig. 5 illustre de manière schématique une section d'une vue partielle d'un dispositif d'extraction monté dans un robot d'analyse, selon un mode de réalisation de l'invention.

De manière générale, le robot d'analyse dispose d'une pipette qui aspire le plasma pour réaliser des analyses de sang après une étape de centrifugation de ce dernier.

Conformément à un mode de réalisation de l'invention, le dispositif d'extraction 1 est réalisé en forme de pipette configurée pour être positionnée dans un support adapté du robot d'analyse 37. Des moyens de positionnement 39 ou de calage, par exemple des piges, sont utilisés pour disposer le dispositif d'extraction 1 dans le robot 37.

Les canaux d'extraction (canal de sortie principale 17 et canaux de sortie secondaires 15) sont reliés au système de pompage et de gestion des fluides (non représenté) du robot d'analyse 37. En outre, des moyens d'étanchéité 41 (par exemple des joints toriques) sont prévus pour réaliser l'étanchéité entre le dispositif d'extraction 1 et le robot d'analyse 37.

Ainsi, un tube de sang peut être placé directement dans le robot afin de réaliser les étapes de séparation et d'analyse sans aucune étape préalable de centrifugation. Avantageusement, le dispositif en forme de pipette est changé pour chaque nouveau tube de sang afin d'éviter les contaminations.

Selon un premier mode de réalisation, les premier(s) et deuxième(s) réservoir(s) 23, 25 ainsi que le moyen de commande 31 font partie du robot d'analyse 37.

Selon un deuxième mode de réalisation, le(s) premier(s) réservoir(s) 23 est(sont) intégré(s) dans le dispositif d'extraction 1. Chaque premier réservoir 23 est par exemple aménagé dans le prolongement du moyen de prélèvement 15 de liquide correspondant. Le deuxième réservoir 25 peut rester intégré dans le robot d'analyse 37.

Selon un troisième mode de réalisation, le(s) deuxième(s) réservoir(s) est(sont) également intégré(s) dans le dispositif d'extraction 1 aménagé dans le prolongement de la conduite principale 3. Ainsi, il n'est plus nécessaire de prévoir des connexions avec des réservoirs en dehors du dispositif.

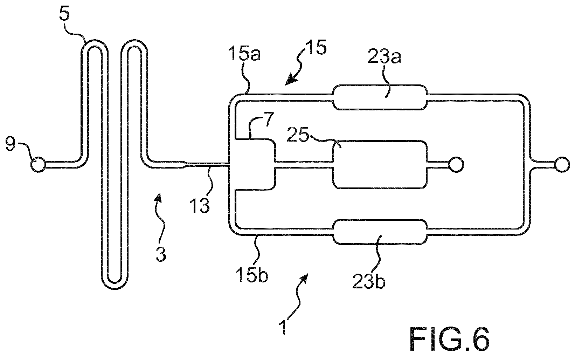

En effet, le dispositif d'extraction 1 de la Fig. 6 comporte deux premiers canaux de sortie 15a, 15b (moyens de prélèvement) agencés symétriquement de part et d'autre de la conduite principale 3 et prolongés par deux premiers réservoirs latéraux 23a, 23b correspondants pour récupérer la phase liquide appauvrie en particules 27a. La conduite principale 3 est prolongée par un deuxième réservoir 25 central pour récupérer la phase enrichie en particules 27b.

Selon un quatrième mode de réalisation, le moyen de commande 31 est également intégré dans le dispositif d'extraction 1 pour contrôler la pression dans la conduite principale 3 et les moyens de prélèvement 15a, 15b conférant de ce fait un caractère compact et autonome au dispositif d'extraction 1 qui peut être intégré par exemple dans une pipette manuelle.

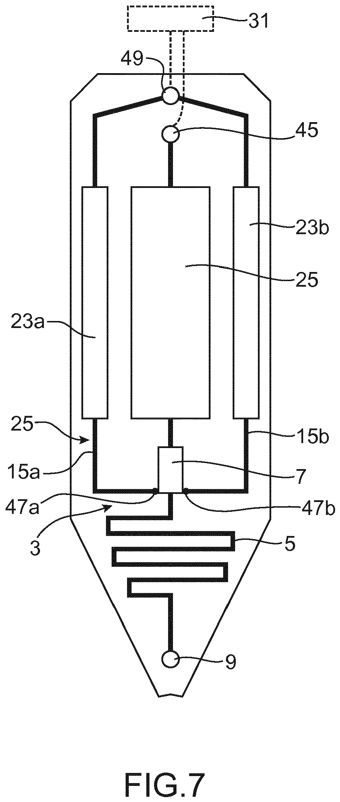

En effet, la Fig. 7 illustre de manière schématique une pipette d'extraction d'une phase liquide appauvrie en particules d'une suspension, selon un mode préféré de réalisation de l'invention.

La pipette d'extraction 21 intègre un réseau fluidique comprenant une conduite principale 3 d'écoulement de la suspension, des moyens de prélèvement de liquide 15a, 15b, un ou des premier(s) réservoir(s) 23a, 23b, et un ou des deuxième(s) réservoir(s) 25. Dans l'exemple de la Fig. 7, la pipette 21 comporte deux premiers canaux de sortie 15a, 15b et deux premiers réservoirs 23a, 23b latéraux et un seul deuxième réservoir 25 central. Le ratio en volume des réservoirs latéraux par rapport au réservoir central est choisi inférieur à 0,15.

Le réseau fluidique de la pipette 21 est défini par un orifice d'admission 9 pour l'entrée de la suspension, des orifices de sorties des fluides, ainsi que des canaux et chambres obtenus par gravure, usinage, ou moulage d'un substrat et fermé par assemblage d'un film polymère ou par collage d'une contre plaque. La pipette 21 d'extraction est réalisée par exemple à partir d'un matériau en polymère (polycarbonate, PDMS, PMMA), en verre, en silicium, etc.

La conduite principale 3 comporte un canal de pré-configuration 5 en forme de serpentin muni d'un orifice d'admission 9, une cellule de fractionnement 7, et un orifice principal d'aspiration 45.

La cellule de fractionnement 7 est disposée en aval du canal de pré-configuration 5 et comprend au moins un lieu de singularité adapté pour provoquer la formation d'au moins un vortex de recirculation. L'orifice principal d'aspiration 45 est disposé en aval de la cellule de fractionnement 7.

Chaque moyen de prélèvement 15a, 15b comprend une entrée de prélèvement 47a, 47b disposée au niveau d'une région de la cellule de fractionnement 7 où la suspension se trouve appauvrie en particules du fait du vortex de recirculation. Les moyens de prélèvement 15a, 15b sont reliés à un orifice secondaire d'aspiration 49.

Chaque premier réservoir 23a, 23b intégré à la pipette 21 est destiné à récupérer la phase liquide appauvrie en particules. Chaque premier réservoir 23a, 23b est aménagé dans le moyen de prélèvement 15a, 15b correspondant et est disposé entre l'entrée de prélèvement 47a, 47b correspondant et l'orifice secondaire d'aspiration 49.

Le deuxième réservoir 25 intégré à la pipette 21 est destiné à récupérer la phase restante enrichie en particules de la suspension. Ce deuxième réservoir 25 est aménagé dans la conduite principale 3 et est disposé entre la cellule de fractionnement 7 et l'orifice principal d'aspiration 45.

Avantageusement, la pipette 21 d'extraction est montée dans un support de pipette comportant un moyen de commande.

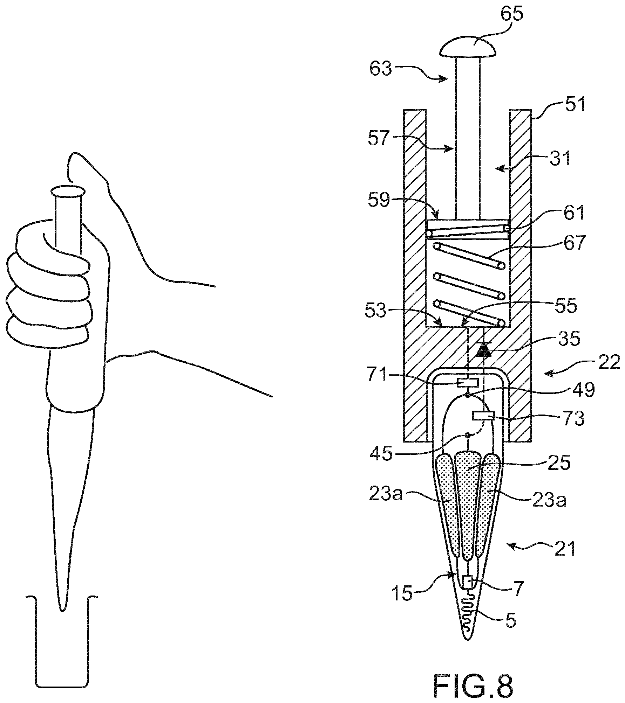

En effet, la Fig. 8 illustre de manière schématique un système d'extraction comportant un support de pipette et une pipette d'extraction, selon un autre mode préféré de réalisation de l'invention.

Le système d'extraction est un système autonome comportant un support 22 de pipette adapté pour accueillir une pipette 21 d'extraction selon l'exemple de la Fig. 7 et comportant un moyen de commande 31.

En variante, le moyen de commande 31 est directement intégré à la pipette 21 d'extraction.

Le moyen de commande 31 est couplé via des ouvertures de manière étanche (relativement à l'écoulement des liquides) aux orifices principal 45 et secondaires d'aspiration 49. Le moyen de commande 31 est configuré pour contrôler la pression dans la conduite principale 3 et les moyens de prélèvement 15a, 15b de liquide de manière à aspirer la suspension sous l'effet d'une première commande mettant les réservoirs 23a, 23b, 25 en dépression depuis les orifices principal 45 et secondaires 49 d'aspiration.

Ainsi, lors d'un premier actionnement du moyen de commande 31, la suspension est amenée dans la cellule de fractionnement 7 où elle se fractionne en une première fraction liquide appauvrie en particules et une seconde fraction enrichie en particules. La première fraction est guidée vers les premiers réservoirs 23a, 23b et la seconde fraction est guidée vers le deuxième réservoir 25.

En outre, le même moyen de commande 31 est apte à éjecter la phase liquide appauvrie en particules sous l'effet d'une deuxième action mettant les réservoirs en surpression. Un moyen de non-retour 35 (par exemple, une valve de type clapet anti-retour) est disposé en aval de l'orifice principal d'aspiration 45 de sorte que lors de la mise en surpression des réservoirs, les premiers réservoirs 23a, 23b se vident alors que le deuxième réservoir 25 reste plein.

On notera que certaines analyses de sang comme la mesure d'ions dans le plasma imposent des temps très courts (moins d'une à deux heures) entre le prélèvement et la séparation du plasma. Habituellement, dans ce genre de cas, le patient est obligé de se déplacer au laboratoire d'analyse. Grâce, au système d'extraction selon ce mode de réalisation de l'invention, le prélèvement peut être effectué au chevet du patient, puis le tube de sang peut être placé dans le système d'extraction afin d'enclencher immédiatement le processus d'extraction du plasma. Ensuite, les échantillons de plasma peuvent être envoyés au laboratoire d'analyse. De cette manière, l'extraction du plasma s'effectue en quelques minutes sans nécessiter le déplacement du patient.

Avantageusement, le moyen de commande peut fonctionner de manière automatique grâce à un système de pompage électrique ou de manière manuelle grâce à un système de pompage mécanique.

Plus particulièrement, l'exemple de la Fig. 8 illustre un moyen de commande 31 comportant un tube 51 terminé par un fond 53 comprenant une ouverture 55 communiquant d'une part avec l'orifice principal 45 en aval du deuxième réservoir 25 et d'autre part, avec l'orifice secondaire 49 en aval des premiers réservoirs 23a, 23b. Le tube 51 est muni d'un piston 57 comprenant une première partie 59 de forme cylindrique pourvue d'un joint 61, destinée à coulisser de manière étanche dans l'alésage du tube 51 et une deuxième partie 63 comprenant une zone de préhension 65. La première partie 59 du piston 57 est couplée à un ressort 67 logé dans le tube 51.

A l'état initial, c'est-à-dire avant que ne soit mise en oeuvre l'aspiration de la suspension, le ressort 67 est dans un état comprimé en réponse par exemple à une force d'appui sur la zone de préhension 65 du piston 57 et les réservoirs 23a, 23b, 25 sont vides. Ensuite, en diminuant la force d'appui exercée sur la zone de préhension 65, le ressort 67 se décompresse en entraînant le piston 57 dans un mouvement de translation dans le sens de l'aspiration créant ainsi une dépression apte à générer un écoulement permanent. Cet écoulement permet la formation d'une couche claire dans le canal de pré-configuration 5 ainsi que la formation de deux vortex dans la cellule de fractionnement 7 au débouché du canal de pré-configuration 5. L'effet d'aspiration permet également, compte tenu de la communication de l'ouverture 55 du tube 51 avec les orifices principal 45 et secondaires 49, de faire pénétrer simultanément la phase liquide appauvrie en particules dans les premiers réservoirs 23a, 23b et la phase concentrée en particules dans le deuxième réservoir 25.

Avantageusement, la pipette 21 comporte un premier filtre 71 disposé au niveau de l'orifice secondaire 49, et un deuxième filtre 73 disposé au niveau de l'orifice principal 45. L'exemple de la Fig. 6 montre également des premier et deuxième filtres 71, 73 de la pipette montée dans le robot d'analyse. Les premier et deuxième filtres 71, 73 sont configurés pour laisser passer l'air et bloquer tout écoulement de liquide. Ainsi, les phases appauvrie et concentrée en particules ne peuvent pas passer dans le tube 51 du moyen de commande 31. En variante, les premier et deuxième filtres 71, 73 sont disposés dans le support 22 de pipette aux niveaux des ouvertures couplées aux orifices secondaires 49 et principal 45.

Lorsque, l'opérateur estime que le volume de la phase liquide appauvrie en particules stocké dans les premiers réservoirs 23a, 23b est suffisant, il peut récupérer ce volume en actionnant le piston 57 dans le sens opposé.

Ainsi, lorsque l'opérateur ré-appuie sur la zone de préhension 65, le piston 57 exerce une surpression sur les réservoirs entrainant l'écoulement de la phase liquide appauvrie en particules dans le sens d'évacuation. Cette mise en surpression des réservoirs entraîne l'évacuation de la phase liquide appauvrie en particules au niveau de l'orifice d'admission 9 et par conséquent, la vidange des premiers réservoirs 23a, 23b tandis que le deuxième réservoir 25 ne se vide pas grâce au moyen d'anti-retour 35. Dans ce mode de réalisation, l'orifice d'admission 9 fait également office d'orifice d'éjection.

L'opérateur peut alors manipuler la phase liquide appauvrie en particules récupérée dans un récipient sans risque de la polluer par des particules. La phase enrichie en particules reste stockée dans le deuxième réservoir 25 sans risque de contamination.

Selon un mode de réalisation particulier, le premier filtre 71 est en matériau hydrophobe et le deuxième filtre 73 est en matériau hydrophile de sorte que le moyen d'anti-retour 35 est créé par l'absorption de liquide dans le deuxième filtre 73, qui bloque la pression appliquée par le piston 57 sur le liquide enrichi.

En outre, le matériau hydrophile du deuxième filtre 73 est apte à maintenir un effet de pompage par capillarité lors du processus de vidange, c'est-à-dire lorsque le piston 57 a une course dans le sens d'éjection, permettant de purger la partie de la conduite principale 3 en amont de la cellule de fractionnement 7. Ceci permet d'éviter ou de limiter la contamination en particules (globules rouges) de la phase liquide appauvrie en particules (plasma) lors de l'éjection de cette dernière.

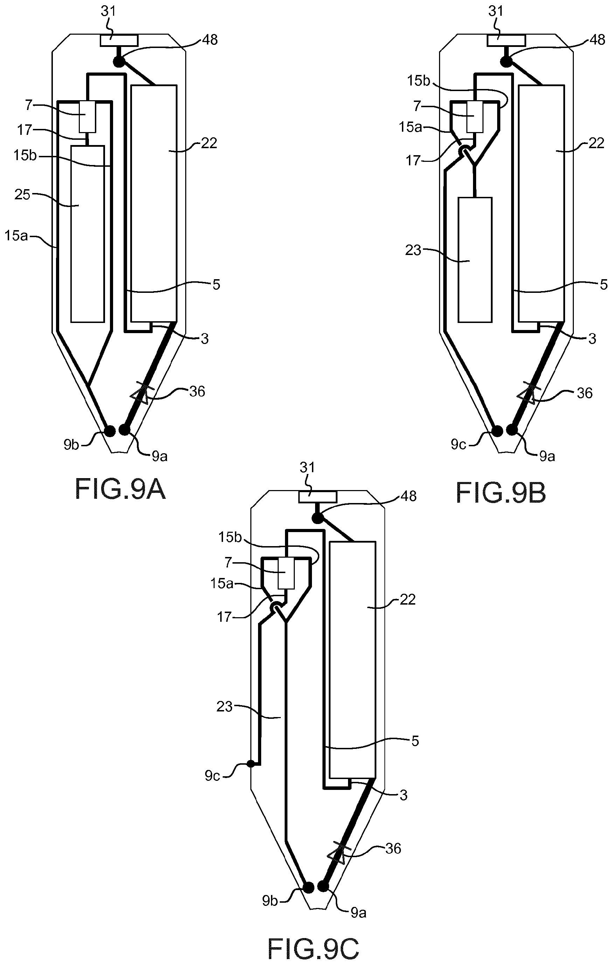

La Fig. 9A illustre de manière schématique un dispositif d'extraction, selon un autre mode de réalisation de l'invention.

Selon ce mode de réalisation, le dispositif d'extraction 1, par exemple en forme de pipette, comporte un réservoir tampon 22, destiné à contenir un échantillon de suspension, cette dernière étant aspirée par un moyen d'actionnement 31. La séparation entre une partie enrichie et une partie appauvrie de ladite suspension est effectuée non pas lors de l'étape de pompage de la suspension dans le dispositif, comme dans les modes de réalisation précédents, mais lors de l'étape de refoulement d'une partie appauvrie ou de la partie enrichie de ladite suspension en dehors du dispositif d'extraction 1.

En effet, la suspension prélevée est admise dans un réservoir, dit réservoir tampon 22, le réservoir tampon communiquant avec l'extérieur par un orifice d'admission 9a. Cet orifice d'admission est pourvu d'un moyen anti-retour 35, apte à bloquer l'écoulement de la suspension du réservoir tampon 22 vers l'extérieur du dispositif, à travers l'orifice d'admission 9a.

L'admission de la suspension dans le réservoirtampon 22 est par exemple obtenue par une mise en dépression du réservoir tampon 22. Sur l'exemple de la Fig. 9A, un moyen de commande 31 est prévu pour aspirer la suspension dans le réservoir tampon 22, par l'intermédiaire d'un orifice secondaire d'aspiration 48. Cet orifice peut être doté d'un filtre hydrophile, de façon à bloquer un écoulement du liquide prélevé à travers l'orifice secondaire d'aspiration 48.

Le moyen de commande 31 est également apte à appliquer une surpression dans le réservoir tampon 22, de telle sorte que la suspension prélevée est chassée de ce réservoir à travers une conduite principale d'écoulement du liquide 3, débouchant sur une cellule de fractionnement 7. Dans la cellule de fractionnement 7, la suspension se fractionne en une première fraction liquide appauvrie en particules, et une seconde fraction enrichie en particules. De même que dans les modes de réalisation précédents, la conduite principale d'écoulement 3 comporte un canal de pré-configuration 5, dont la longueur est suffisante pour permettre l'établissement d'une couche claire : sa longueur est par exemple comprise entre 1cm et 10 cm, sa section étant similaire aux dimensions déjà évoquées.

Comme dans les modes de réalisation précédents, le canal de pré-configuration 5 débouche sur la cellule de fractionnement 7.

Dans l'exemple représenté sur la Fig. 9A, la première partie appauvrie est dirigée dans des canaux de sortie 15a, 15b, vers un premier orifice de sortie 9b du liquide appauvri, ce dernier étant alors éjecté vers l'extérieur du dispositif, pour être récupéré. En aval de la cellule de fractionnement 7, un canal de sortie 17 dirige la phase enrichie vers un deuxième réservoir 25, où cette phase enrichie est conservée. Le deuxième réservoir 25 peut comporter un évent, non représenté, de façon à chasser l'air durant son remplissage. Ainsi, selon ce mode de réalisation, le dispositif 1 permet d'éjecter une phase appauvrie de la suspension, tandis que la phase enrichie est conservée dans un deuxième réservoir 25.

La Fig. 9B illustre de manière schématique un dispositif d'extraction, selon une variante de la Fig. 9A.

Selon cette variante, en aval de la cellule de fractionnement 7, un premier réservoir 23 collecte la phase appauvrie de la suspension, ce premier réservoir 23 étant alors connecté, en aval de la cellule de fractionnement 7 par un canal 15a et/ou 15b. Dans un tel cas, le canal de sortie 17 dirige la phase enrichie vers un deuxième orifice de sortie 9c, le liquide enrichi étant alors éjecté vers l'extérieur du dispositif. Ainsi, le dispositif de fractionnement 1 permet d'éjecter une phase enrichie de la suspension, tandis que la phase appauvrie est conservée dans un premier réservoir 23.

Selon encore une autre variante représentée sur la Fig. 9C, la phase appauvrie et la phase enrichie sont dirigées respectivement par un premier orifice de sortie 9b et un deuxième orifice de sortie 9c, vers l'extérieur du dispositif, afin que ces deux phases puissent être récupérées séparément l'une de l'autre.

Ainsi, selon ce mode de réalisation, on prélève la suspension dont on souhaite séparer une phase appauvrie d'une phase enrichie, par l'actionnement d'un moyen de commande 31 permettant le pompage de la suspension dans le dispositif de fractionnement 1. Cette suspension est préalablement stockée dans le réservoir tampon 22. Un actionnement d'un moyen de commande 31 permet de diriger ledit liquide vers la conduite principale 3, de telle sorte que le liquide pénètre dans la cellule de fractionnement 7.

Selon les différentes variantes, le dispositif peut comporter :

- un deuxième réservoir 25, destiné à récupérer la phase liquide enrichie en particules, la phase appauvrie étant alors éjectée du dispositif par un premier moyen d'éjection 9b (Fig. 9A) ;
- un premier réservoir 23 destiné à récupérer la phase liquide appauvrie en particules, la phase enrichie étant alors éjectée du dispositif par un deuxième moyen d'éjection 9c (Fig. 9B) ;
- un premier réservoir 23 destiné à récupérer la phase liquide appauvrie en particules, et un deuxième réservoir 25, destiné à récupérer la phase liquide enrichie en particules (Figs. 6, 7);
- un premier moyen d'éjection 9b, destiné à l'éjection de la phase appauvrie, et un deuxième moyen d'éjection 9c, pour l'éjection de la phase enrichie (Fig. 9C).

On notera que, dans le cas de fractionnement d'un échantillon de sang, ce dernier est dilué dans un tampon avec des facteurs de dilution de 1 pour 2 à 1 pour 100, et de préférence de 1 pour 20.

Avantageusement, le dispositif 1 ou pipette 21 d'extraction peut également comporter des moyens de mélange pour effectuer une étape de dilution afin d'utiliser la pipette ou dispositif d'extraction sur un tube de sang non dilué.

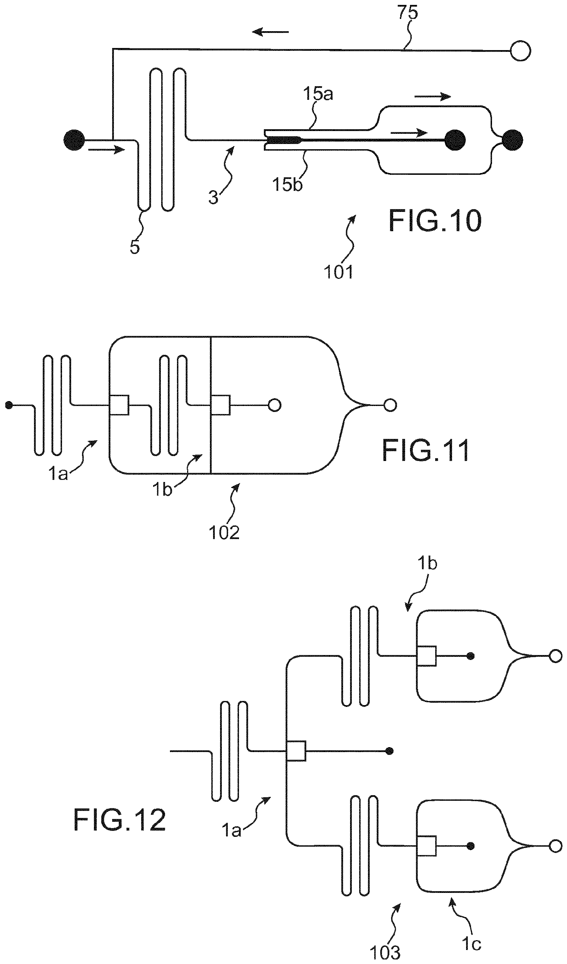

En effet, l'exemple de la Fig. 10 montre un dispositif 101 ou pipette d'extraction comportant un moyen d'injection 75 d'un tampon de dilution débouchant dans la conduite principale 3 en amont du canal de pré-configuration 5. Ainsi, le canal de pré-configuration en forme de serpentin assure à la fois le mélange et la configuration de la couche claire. La fonction de mélange peut aussi être assurée par tout autre moyen connu par l'homme de l'art en microfluidique tels que des moyens de structuration à la surface des canaux décrits par Strook et al., dans « Chaotic Mixer for Microchannels », Science vol 295, 25.01.2002.

En outre, les Figs. 11 et 12 montrent des dispositifs ou pipettes comportant une pluralité de dispositifs d'extraction élémentaires.

L'exemple de la Fig. 11 montre un dispositif 102 ou pipette constitué par au moins deux dispositifs d'extraction 1a, 1b élémentaires couplés entre eux. Les conduites principales des dispositifs d'extraction 1a, 1b élémentaires sont reliées en série et les moyens de prélèvement correspondants sont reliés en dérivation. La phase enrichie en particules extraite par un premier dispositif élémentaire 1a est injectée en entrée du dispositif suivant 1b pour subir un fractionnement supplémentaire et, par conséquent, augmenter le volume fluidique de la phase appauvrie en particules. La mise en série de deux extractions permet de viser des ratios globaux de 22% à 25%.

Par ailleurs, on utilise la même démarche de calcul présentée précédemment pour dimensionner les différentes résistances hydrauliques.

L'exemple de la Fig. 12 montre également un dispositif 103 ou pipette constitué par une pluralité de dispositifs d'extraction élémentaires 1a, 1b, 1c. Les dispositifs d'extraction élémentaires sont couplés entre eux, de telle manière que le moyen de prélèvement d'un dispositif courant est relié en série avec la conduite principale d'un dispositif suivant. Ainsi, la phase liquide appauvrie en particules extraite par le dispositif courant est injectée en entrée du dispositif suivant permettant de purifier davantage la phase liquide appauvrie en particules.

On notera que les modes de réalisation des Figs. 10 à 12 sont compatibles avec un dispositif d'extraction destiné à être monté dans un robot d'analyse ainsi qu'avec une pipette d'extraction autonome.

Le dispositif ou pipette d'extraction selon l'invention trouvera avantageusement application dans le domaine médical, afin de fractionner un échantillon de sang. Le dispositif selon l'invention permet alors de recueillir de manière simple et en un temps rapide, un volume de plasma appauvri en globules rouges.

**Revendications**

1. Dispositif d'extraction d'une phase liquide appauvrie en particules d'une suspension biologique, comportant :

    - une conduite principale (3) d'écoulement de ladite suspension, la conduite principale comportant une cellule de fractionnement (7) comprenant au moins un lieu de singularité adapté pour provoquer la formation d'au moins un vortex de recirculation, et

- au moins un moyen de prélèvement (15) de liquide, disposé au niveau d'une région de la cellule de fractionnement (7) où ladite suspension se trouve appauvrie en particules du fait dudit vortex de recirculation, la conduite principale (3) comporte un canal de pré-configuration (5) de couche claire disposé en amont de la cellule de fractionnement (7), ledit canal de pré-configuration présentant une longueur supérieure à une longueur limite de stabilité prédéterminée pour former une couche claire au voisinage de ses parois, ladite cellule de fractionnement (7) et ledit canal de pré-configuration (5) étant formés sur un même substrat, et en ce que ledit dispositif comporte en outre :

- au moins un premier réservoir (23a, 23b) prévu pour récupérer ladite phase liquide appauvrie en particules,
- au moins un deuxième réservoir (25) prévu pour récupérer la phase restante

enrichie en particules de ladite suspension, ledit au moins un premier réservoir et ledit au moins un deuxième réservoir est/sont intégré(s) dans ledit dispositif

- un moyen de commande (31) prévu pour aspirer la suspension lors d'un premier actionnement afin de l'amener dans la cellule de fractionnement (7) où elle se fractionne en une première fraction liquide appauvrie en particules et une seconde fraction enrichie en particules et pour guider ladite première fraction vers ledit au moins un premier réservoir (23a, 23b) et ladite seconde fraction vers ledit au moins un deuxième réservoir (25), ledit moyen de commande (31) étant configuré lors d'un deuxième actionnement à éjecter ladite phase liquide appauvrie en particules ou ladite phase liquide enrichie en particules.

2. Dispositif selon la revendication 1, **caractérisé en ce que** le canal de pré-configuration (5) présente une longueur comprise entre environ 1 cm et 10 cm, une profondeur comprise entre environ 50 $\mu$m et 100 $\mu$m, et une largeur comprise entre environ 50 $\mu$m et 100 $\mu$m.

3. Dispositif selon la revendication 1 ou 2, **caractérisé en ce qu'**il comporte un moyen d'anti-retour (35) disposé en amont du deuxième réservoir (25), configuré pour retenir la phase liquide enrichie en particules dans ledit deuxième réservoir lors de l'éjection de ladite phase liquide appauvrie en particules.

4. Dispositif selon l'une quelconque des revendications précédentes, **caractérisé en ce que** le ratio entre le volume total dudit au moins un premier réservoir et le volume dudit au moins un deuxième réservoir est dépendant d'un rendement d'extraction préalablement déterminé.

5. Dispositif selon la revendication 1, **caractérisé en ce qu'**il comporte un réservoir tampon (22), apte à collecter la suspension, lors d'un premier actionnement d'un moyen de commande (31), ledit réservoir tampon étant disposé en amont de la cellule de fractionnement, de telle sorte que lors d'un deuxième actionnement d'un moyen de commande (31), la suspension est dirigée du réservoir tampon vers la cellule de fractionnement.

6. Dispositif selon la revendication 5, **caractérisé en ce qu'**il comporte en aval de la cellule de fractionnement (7), un premier orifice d'éjection (9b), pour éjecter une phase liquide appauvrie en particules, et/ou un deuxième orifice d'éjection (9c), pour éjecter une phase liquide enrichie en particules.

7. Dispositif selon la revendication 5, **caractérisé en ce qu'**il comporte en aval de la cellule de fractionnement, un deuxième réservoir (25) pour collecter la phase liquide enrichie, et un premier orifice (9b), pour éjecter la phase liquide appauvrie du dispositif.

8. Dispositif selon la revendication 5, **caractérisé en ce qu'**il comporte en aval de la cellule de fractionnement, un premier réservoir (23), pour collecter la phase liquide appauvrie, et un deuxième orifice (9c) pour éjecter la phase liquide enrichie du dispositif.

9. Dispositif selon l'une quelconque des revendications précédentes, **caractérisé en ce que** ledit moyen de commande (31) est intégré dans ledit dispositif et est configuré pour contrôler la pression dans la conduite principale et ledit au moins un moyen de prélèvement.

10. Dispositif constitué par au moins deux dispositifs élémentaires selon l'une quelconque des revendications précédentes couplés entre eux, de telle manière que les conduites principales sont reliées en série et les moyens de prélèvements correspondants sont reliés en dérivation.

11. Dispositif constitué par une pluralité de dispositifs élémentaires selon l'une quelconque des revendications 1 à 9 couplés entre eux, de telle manière que le moyen de prélèvement d'un dispositif courant est relié en série avec la conduite principale d'un dispositif suivant de sorte que la phase liquide appauvrie en particules extraite par le dispositif courant soit injectée en entrée du dispositif suivant.

12. Pipette d'extraction d'une phase liquide appauvrie en particules d'une suspension biologique, comportant :

- une conduite principale (3) d'écoulement de ladite suspension, la conduite principale comportant un canal de pré-configuration (5) d'une couche claire muni d'un orifice d'admission (9), ledit canal de pré-configuration présentant une longueur supérieure à une longueur limite de stabilité prédéterminée pour former une couche claire au voisinage de ses parois, une cellule de fractionnement (7) disposée en aval dudit canal de pré-configuration et comprenant au moins un lieu de singularité adapté pour provoquer la formation d'au moins un vortex de recirculation, et un orifice principal d'aspiration (45) disposé en aval de ladite cellule de fractionnement,
- au moins un moyen de prélèvement (15a, 15b) de liquide comprenant au moins une entrée de prélèvement disposée au niveau d'une région de la cellule de fractionnement où ladite suspension se trouve appauvrie en particules et un orifice secondaire d'aspiration (49),
- au moins un premier réservoir (23a, 23b) intégré à la pipette pour récupérer ladite phase liquide appauvrie en particules, ledit au moins un premier réservoir étant aménagé dans ledit au moins un moyen de prélèvement de liquide et étant disposé entre ladite au moins une entrée de prélèvement et ledit orifice secondaire d'aspiration,
- au moins un deuxième réservoir (25) intégré à la pipette pour récupérer la phase restante enrichie en particules de ladite suspension, ledit au moins un deuxième réservoir étant aménagé dans ladite conduite principale et étant disposé entre ladite cellule de fractionnement et ledit orifice principal d'aspiration
- un moyen de commande (31) couplé aux orifices principal et secondaire d'aspiration, ledit moyen de commande étant configuré lors d'un premier actionnement à aspirer la suspension pour l'amener dans la cellule de fractionnement (7) où ladite suspension se fractionne en une première fraction liquide appauvrie en particules et une seconde fraction enrichie en particules, ledit moyen de commande guidant ladite première fraction vers ledit au moins un premier réservoir (23a, 23b) et ladite seconde fraction vers ledit au moins un deuxième réservoir (25).

13. Pipette selon la revendication 12 **caractérisée en ce que** le moyen de commande (31) comporte un tube terminé par une ouverture reliée d'une part à l'orifice principal et d'autre part à l'orifice secondaire, ledit tube étant muni d'un piston couplé à un ressort de sorte que l'action du ressort sur le piston crée une dépression adaptée pour aspirer la suspension.

14. Pipette selon la revendication 12 ou 13, **caractérisée en ce qu'**elle comporte un premier filtre (71) disposé au niveau de l'orifice secondaire, et un deuxième filtre (73) disposé au niveau de l'orifice principal, lesdits premier et deuxième filtres étant configurés pour laisser passer l'air et bloquer tout écoulement de liquide, et **en ce que** le premier filtre est en matériau hydrophobe et le deuxième filtre est en matériau hydrophile de sorte qu'une différence de mouillabilité est créée entre les premier et deuxième filtres qui fait que lors d'une mise en surpression des réservoirs, ledit au moins un premier réservoir se vide alors que le deuxième réservoir reste plein.

**Patentansprüche**

1. Vorrichtung zum Extrahieren einer partikelarmen flüssigen Phase aus einer biologischen Suspension, enthaltend:

- eine Hauptleitung (3) für die Strömung der Suspension, wobei die Hauptleitung eine Fraktionierungszelle (7) enthält, die zumindest eine Singularitätsstelle umfasst, die dazu geeignet ist, die Bildung von zumindest einem Rezirkulationswirbel zu bewirken, und
- zumindest eine Flüssigkeitsentnahmeeinrichtung (15), die in Höhe eines Bereichs der Fraktionierungszelle (7) angeordnet ist, wo die Suspension aufgrund des Rezirkulationswirbels partikelarm vorliegt, wobei die Hauptleitung (3) einen Kanal (5) zur Vorkonfiguration einer klaren Schicht enthält, welcher der Fraktionierungszelle (7) vorgelagert ist, wobei der Vorkonfigurationskanal eine Länge hat, die größer als eine vorbestimmte Stabilitätsgrenzlänge ist, um eine klaren Schicht in der Nähe seiner Wände zu bilden, wobei die Fraktionierungszelle (7) und der Vorkonfigurationskanal (5) auf ein und demselben Substrat ausgebildet sind,

wobei die Vorrichtung ferner enthält:

- zumindest einen ersten Behälter (23a, 23b), der dazu vorgesehen ist, die partikelarme flüssige Phase zu gewinnen,

- zumindest einen zweiten Behälter (25), der dazu vorgesehen ist, die partikelreiche restliche Phase der Suspension zu gewinnen,

wobei der zumindest eine erste Behälter und der zumindest eine zweite Behälter in der Vorrichtung integriert sind,

- eine Steuereinrichtung (31), die dazu vorgesehen ist, die Suspension bei einer ersten Betätigung anzusaugen, um sie in die Fraktionierungszelle (7) zu leiten, wo sie in eine partikelarme erste flüssige Fraktion und in eine partikelreiche zweite Fraktion aufgeteilt wird, und um die erste Fraktion zu dem zumindest einen ersten Behälter (23a, 23b) zu leiten und um die zweite Fraktion zum dem zumindest einen zweiten Behälter (25) zu leiten, wobei die Steuereinrichtung (31) dazu ausgelegt ist, bei einer zweiten Betätigung die partikelarme flüssige Phase oder die partikelreiche Phase auszustoßen.

2. Vorrichtung nach Anspruch 1, **dadurch gekennzeichnet, dass** der Vorkonfigurationskanal (5) eine Länge zwischen etwa 1 cm und 10 cm, eine Tiefe zwischen etwa 50 μm und 100 μm und eine Bereite zwischen etwa 50 μm und 100 μm aufweist.

3. Vorrichtung nach Anspruch 1 oder 2, **dadurch gekennzeichnet, dass** sie eine Rücklaufsperre (35) enthält, die dem zweiten Behälter (25) vorgelagert ist, dazu ausgelegt ist, beim Ausstoßen der partikelarmen flüssigen Phase die partikelreiche flüssige Phase in dem zweiten Behälter zurückzuhalten.

4. Vorrichtung nach einem der vorangehenden Ansprüche, **dadurch gekennzeichnet, dass** das Verhältnis zwischen dem Gesamtvolumen des zumindest einen ersten Behälters und dem Volumen des zumindest einen zweiten Behälters abhängig ist von einem zuvor ermittelten Extraktionswirkungsgrad.

5. Vorrichtung nach Anspruch 1, **dadurch gekennzeichnet, dass** sie einen Pufferbehälter (22) enthält, der dazu geeignet ist, bei einer ersten Betätigung einer Steuereinrichtung (31) die Suspension aufzufangen, wobei der Pufferbehälter der Fraktionierzelle vorgelagert ist, so dass bei einer zweiten Betätigung einer Steuereinrichtung (31) die Suspension von dem Pufferbehälter zur Fraktionierzelle geleitet wird.

6. Vorrichtung nach Anspruch 5, **dadurch gekennzeichnet, dass** sie der Fraktionierzelle (7) nachgelagert eine erste Ausstoßöffnung (9b) aufweist, um eine partikelarme flüssige Phase auszustoßen, und/oder eine zweite Ausstoßöffnung (9c), um eine partikelreiche flüssige Phase auszustoßen.

7. Vorrichtung nach Anspruch 5, **dadurch gekennzeichnet, dass** sie der Fraktionierzelle nachgelagert einen zweiten Behälter (25) enthält, um die angereicherte flüssige Phase aufzufangen, sowie eine erste Öffnung (9b), um die verarmte flüssige Phase aus der Vorrichtung auszustoßen.

8. Vorrichtung nach Anspruch 5, **dadurch gekennzeichnet, dass** sie der Fraktionierzelle nachgelagert einen ersten Behälter (23) enthält, um die verarmte flüssige Phase aufzufangen, sowie eine zweite Öffnung (9c), um die angereicherte flüssige Phase aus der Vorrichtung auszustoßen.

9. Vorrichtung nach einem der vorangehenden Ansprüche, **dadurch gekennzeichnet, dass** die Steuereinrichtung (31) in der Vorrichtung integriert und dazu ausgelegt ist, den Druck in Hauptleitung und Entnahmeeinrichtung zu steuern.

10. Vorrichtung, bestehend aus zumindest zwei elementaren Vorrichtungen nach einem der vorangehenden Ansprüche, die miteinander gekoppelt sind, so dass die Hauptleitungen in Reihe verbunden sind und die entsprechenden Entnahmeeinrichtungen verzweigend verbunden sind.

11. Vorrichtung, bestehend aus einer Mehrzahl von elementaren Vorrichtung nach einem der Ansprüche 1 bis 9, die miteinander gekoppelt sind, so dass die Entnahmeeinrichtung einer gegenwärtigen Vorrichtung in Reihe mit der Hauptleitung einer nachfolgenden Vorrichtung verbunden ist, so dass die über die gegenwärtige Vorrichtung extrahierte partikelarme flüssige Phase am Einlass der nachfolgenden Vorrichtung eingespritzt wird.

12. Pipette zum Extrahieren einer partikelarmen flüssigen Phase aus einer biologischen Suspension, enthaltend:

- eine Hauptleitung (3) für die Strömung der Suspension, wobei die Hauptleitung einen Kanal (5) zur Vorkonfiguration einer klaren Schicht enthält, welcher mit einer Einlassöffnung (9) versehen ist, wobei der Vorkonfigurationskanal eine Länge hat, die größer als eine vorbestimmte Stabilitätsgrenzlänge ist, um eine klare Schicht in der Nähe seiner Wände zu bilden, sowie eine Fraktionierungszelle (7), die dem Vorkonfigurationskanal nachgeordnet ist und zumindest eine Singularitätsstelle aufweist, die dazu geeignet ist, das Bilden zumindest eines Rezirkulationswirbels hervorzurufen, sowie eine Ansaughauptöffnung (45), die der Fraktionierzelle nachgeordnet ist,

- zumindest eine Entnahmeeinrichtung (15a, 15b) zum Entnehmen von Flüssigkeit, die zumindest einen Entnahmeeinlass aufweist, der in Höhe eines Bereichs der Fraktionierzelle angeordnet ist, wo die Suspension partikelarm vorliegt, sowie eine Ansaugnebenöffnung (49),

- zumindest einen ersten Behälter (23a, 23b), der in der Pipette integriert ist, um die partikelarme flüssige Phase zu gewinnen, wobei der zumindest eine erste Behälter in der zumindest einen Flüssigkeitsentnahmeeinrichtung ausgebildet und zwischen dem zumindest einen Entnahmeeinlass und der Ansaugnebenöffnung angeordnet ist,

- zumindest einen zweiten Behälter (25), der in der Pipette integriert ist, um die partikelreiche restliche Phase der Suspension zu gewinnen, wobei der zumindest eine zweite Behälter in der Hauptleitung ausgebildet und zwischen der Fraktionierzelle und der Ansaughauptöffnung angeordnet ist,

- eine Steuereinrichtung (31), die mit der Ansaughaupt- und Nebenöffnung gekoppelt ist, wobei die Steuereinrichtung dazu vorgesehen ist, die Suspension bei einer ersten Betätigung anzusaugen, um sie in die Fraktionierungszelle (7) zu leiten, wo die Suspension in eine partikelarme erste flüssige Fraktion und in eine partikelreiche zweite Fraktion aufgeteilt wird, wobei die Steuereinrichtung die erste Fraktion zum zumindest einen ersten Behälter (23a, 23b) leitet und die zweite Fraktion zum zumindest einen zweiten Behälter (25) leitet.

13. Pipette nach Anspruch 12, **dadurch gekennzeichnet, dass** die Steuereinrichtung (31) eine Röhre enthält, die mit einer Öffnung endet, die einerseits mit der Hauptöffnung und andererseits mit der Nebenöffnung verbunden ist, wobei die Röhre mit einem Kolben versehen ist, der mit einer Feder gekoppelt ist, so dass die Wirkung der Feder auf den Kolben einen Unterdruck schafft, der dazu geeignet ist, die Suspension anzusaugen.

14. Pipette nach Anspruch 12 oder 13, **dadurch gekennzeichnet, dass** sie einen ersten Filter (71), der in Höhe der Nebenöffnung angeordnet ist, und einen zweiten Filter (73) enthält, der in Höhe der Hauptöffnung angeordnet ist, wobei der erste und der zweite Filter dazu ausgelegt sind, Luft durchzulassen und jegliche Flüssigkeitsströmung zu sperren, und dass der erste Filter aus hydrophobem Material besteht und der zweite Filter aus hydrophilem Material besteht, so dass eine Differenz bei der Benetzbarkeit zwischen dem ersten und dem zweiten Filter geschaffen wird, wodurch bei einer Beaufschlagung der Behälter mit Überdruck der zumindest eine erste Behälter sich leert, während der zweite Behälter voll bleibt.

**Claims**

1. A device for extracting a liquid phase depleted of particles of a biological suspension, including:

- a main duct (3) for flowing said suspension, the main duct including a fractionating cell (7) including at least one singularity location adapted to cause the formation of at least one recirculation vortex, and

- at least one liquid sampling means (15), disposed at a region of the fractionating cell (7) where said suspension is depleted of particles because of said recirculation vortex, the main duct (3) includes a clear layer pre-configuring channel (5) disposed upstream of the fractionating cell (7), said pre-configuring channel having a length higher than a predetermined stability boundary length to form a clear layer in the vicinity of its walls, said fractionating cell (7) and said pre-configuring channel (5) being formed on a same substrate, and in that said device further includes:

- at least one first tank (23a, 23b) provided to recover said liquid phase depleted of particles,

- at least one second tank (25) provided to recover the remaining phase enriched with particles from said suspension,

said at least one first tank and said at least one second tank are integrated in said device;

- a control means (31) provided to suck in the suspension during a first actuation in order to bring it into the fractionating cell (7) where it is fractionated into a first liquid fraction depleted of particles and a second fraction enriched with particles and to guide said first fraction to said at least one first tank (23a, 23b) and said second fraction to said at least one second tank (25), said control means (31) being configured during a second actuation to eject said liquid phase depleted of particles or said liquid phase enriched with particles.

2. The device according to claim 1, **characterised in that** the pre-configuring channel (5) has a length between about 1cm and 10cm, a depth between about $50\mu$m and $100\mu$m, and a width between about $50\mu$m and $100\mu$m.

3. The device according to claim 1 or 2, **characterised in that** it includes an anti-return means (35) disposed upstream of the second tank (25), configured to retain the liquid phase enriched with particles in said second tank upon ejecting said liquid phase depleted of particles.

4. The device according to any of the preceding claims, **characterised in that** the ratio of the total volume of said at least one first tank to the volume of said at least one second tank is dependent on a previously determined extraction efficiency.

5. The device according to claim 1, **characterised in that** it includes a buffer tank (22), able to collect the suspension, during a first actuation of a control means (31), said buffer tank being disposed upstream of the fractionating cell, such that during a second actuation of a control means (31), the suspension is directed from the buffer tank to the fractionating cell.

6. The device according to claim 5, **characterised in that** it includes downstream of the fractionating cell (7), a first ejection port (9b), for ejecting a liquid phase depleted of particles, and/or a second ejection port (9c), for ejecting a liquid phase enriched with particles.

7. The device according to claim 5, **characterised in that** it includes downstream of the fractionating cell, a second tank (25) for collecting the enriched liquid phase, and a first port (9b), for ejecting the depleted liquid phase from the device.

8. The device according to claim 5, **characterised in that** it includes downstream of the fractionating cell, a first tank (23), for collecting the depleted liquid phase, and a second port (9c) for ejecting the enriched liquid phase from the device.

9. The device according to any of the preceding claims, **characterised in that** said control means (31) is integrated in said device and is configured to control pressure in the main duct and said at least one sampling means.

10. A device consisting of at least two unit devices according to any of the preceding claims coupled to each other, such that the main ducts are connected in series and the corresponding sampling means are connected in parallel.

11. A device consisting of a plurality of unit devices according to any of claims 1 to 9, coupled to each other, such that the sampling means of a current device is connected in series with the main duct of a next device such that the liquid phase depleted of particles extracted by the current device is injected at the input of the next device.

12. A pipette for extracting a liquid phase depleted of particles of a biological suspension, including:

- a main duct (3) for flowing said suspension, the main duct including a clear layer pre-configuring channel (5) provided with an intake port (9), said pre-configuring channel having a length higher than a predetermined stability boundary length to form a clear layer in the vicinity of its walls, a fractionating cell (7) disposed downstream of said pre-configuring channel and comprising at least one singularity location adapted to cause the formation of at least one recirculation vortex, and a main suction port (45) disposed downstream of said fractionating cell,
- at least one liquid sampling means (15a, 15b) comprising at least one sampling inlet disposed at a region of the fractionating cell where said suspension is depleted of particles and a secondary suction port (49),
- at least one first tank (23a, 23b) integrated to the pipette to recover said liquid phase depleted of particles, said at least one first tank being provided in said at least one liquid sampling means and being disposed between said at least one sampling inlet and said secondary suction port,
- at least one second tank (25) integrated to the pipette to recover the remaining phase enriched with particles of said suspension, said at least one second tank being provided in said main duct and being disposed between said fractionating cell and said main suction port;
- a control means (31) coupled to the main and secondary suction ports, said control means being configured during a first actuation to suck in the suspension to bring it into the fractionating cell (7) where said suspension is fractionated into a first liquid fraction depleted of particles and a second fraction enriched with particles, said control means guiding said first fraction to said at least one first tank (23a, 23b) and said second fraction to said at least one second tank (25).

13. The pipette according to claim 12, **characterised in that** the control means (31) includes a tube terminated with an aperture connected on the one hand to the main port and on the other hand to the secondary port, said tube being provided with a piston coupled to a spring such that the action of the spring on the piston creates a vacuum adapted to suck in the suspension.

14. The pipette according to claim 12 or 13, **characterised in that** it includes a first filter (71) disposed at the secondary port, and a second filter (73) disposed at the main port, said first and second filters being configured to let air pass and block any liquid flow, and **in that** the first filter is of a hydrophobic material and the second filter is of a hydrophilic material such that a wettability difference is created between the first and the second filters which results **in that** when the tanks are over-pressurised, said at least one first tank is emptied whereas the second tank remains full.

FIG.1A

FIG.1B

FIG.2A

EP 3 013 477 B1

FIG.2B

FIG.3

FIG.4A

FIG.4B

FIG.4C

20

FIG.5

FIG.6

FIG.7

FIG.8

FIG.10

FIG.11

FIG.12

FIG.9A

FIG.9B

FIG.9C

## RÉFÉRENCES CITÉES DANS LA DESCRIPTION

**Documents brevets cités dans la description**

- FR 2931079

**Littérature non-brevet citée dans la description**

- **DE M. FAVRE et al.** Geometrical focusing of cells in a microfluidic device : an approach to separate blood plasma. *Biotheology,* 2006, vol. 43, 147-159

- **STROOK et al.** Chaotic Mixer for Microchannels. *Science,* 25 Janvier 2002, vol. 295